# DEMANDE DE BREVET EUROPEEN

(11) **EP 1 617 709 A1**
(43) Date de publication de la demande: **18.01.2006**
(21) Numéro de dépôt: 04405447.6
(22) Date de dépôt: 14.07.2004
(51) Int. Cl.: H05B 33/20, H05B 33/22, H05B 33/26, C09D 11/02

(54) **Panneau électroluminescent et son procédé de fabrication**

(71) Demandeur: Metalor Technologies SA, 2009 Neuchâtel (CH)
(72) Inventeur: Thalner, Christoph, 2620 Neunkirchen (AT); Meyer, Edouard Marc, Dr., 2000 Neuchâtel (CH); Singer, Alexander, 2300 La Chaux de Fonds (CH)
(74) Mandataire: GLN

(57) **Abrégé**

L'invention concerne un panneau électroluminescent comprenant un ensemble (10) constitué d'un diélectrique (11) et d'une couche active (12), et une première (13) et une deuxième électrodes (14) situées respectivement du côté du fond et de l'avant du panneau destinées à être reliées à un générateur de tension. Ladite deuxième électrode (14) est réalisée en un matériau transparent, ledit diélectrique (11), ladite couche active (12) et ladite première électrode (13) comportant chacun une substance active et les résidus secs d'un liant.
Selon l'invention, le liant est identique pour ledit diélectrique (11), pour ladite couche active (12) et pour ladite première électrode (13).

## Description

La présente invention se rapporte au domaine des sources de lumière électroluminescentes (EL). Elle concerne, plus particulièrement, un panneau électroluminescent et un procédé pour le fabriquer.

Le principe de l'électroluminescence est largement connu. Il repose sur le fait que certaines substances émettent de la lumière lorsqu'elles sont soumises à une tension électrique.

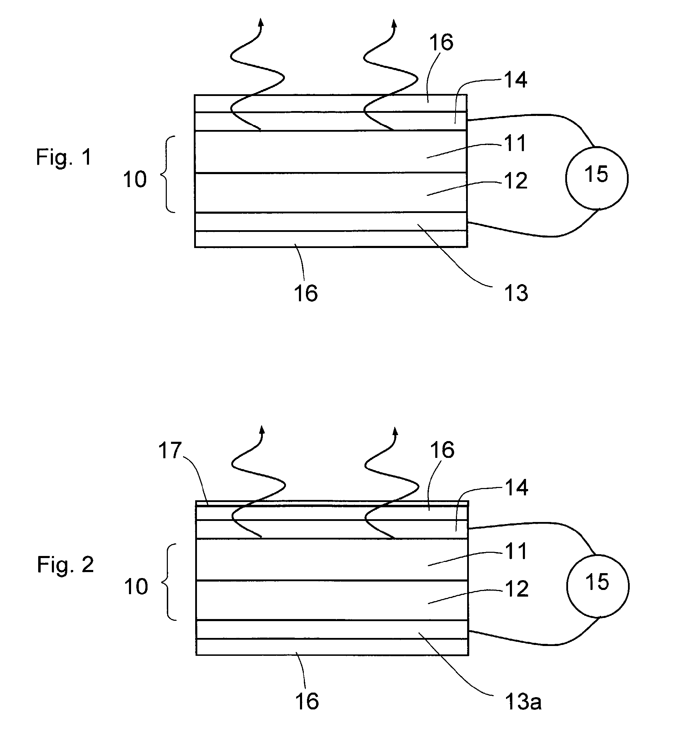

Il existe déjà des panneaux EL dont la structure est illustrée sur la figure 1. Un ensemble 10 constitué d'une couche active 11 superposée à une couche diélectrique 12 de même dimension est enserré dans deux électrodes, une 13 à l'arrière et une 14 à l'avant du panneau. Celles-ci sont reliées à un générateur 15 et appliquent une tension électrique à l'ensemble 10. Enfin, deux couches 16 de stratifié transparent constituent les faces externes du panneau et protègent les parties fonctionnelles.

La couche active et le diélectrique contiennent chacun diverses substances actives connues de l'homme du métier, mélangées à un liant, plus généralement désigné par le terme anglais de binder.

Divers essais expérimentaux ont montré que les résultats obtenus avec les substances et binders habituels pouvaient être considérablement améliorés.

Par ailleurs, l'électrode du fond 13 est constituée de métallisations qui la rendent rigide. Ainsi, le profil du panneau obtenu ne peut être adapté à un support quelconque, tel qu'un mur de forme courbe. Parfois, cette électrode est formée par une fine feuille de métal. Celle-ci permet d'avoir un panneau d'une certaine souplesse, mais cette solution est particulièrement difficile et coûteuse à mettre en oeuvre pour des panneaux de grande dimension.

La présente invention a pour but de fournir un panneau dont les qualités de fonctionnement sont sensiblement améliorées et dont l'utilisation est plus souple. L'invention propose également un procédé pour obtenir un tel panneau.

De façon plus précise, l'invention concerne un panneau électroluminescent du type comprenant un ensemble constitué d'un diélectrique et d'une couche active, et une première et une deuxième électrodes situées respectivement du côté du fond et de l'avant du panneau, destinées à être reliées à un générateur de tension. La deuxième électrode est réalisée en un matériau transparent. Le diélectrique, la couche active et ladite première électrode comportent chacun une substance active et des résidus secs d'un liant.

Selon l'invention, le liant est identique pour le diélectrique, la couche active et la première électrode.

Avantageusement, l'électrode du fond comporte une couche dont la substance active est de la polyaniline et/ou une couche dont la substance active est un autre matériau conducteur.

Le liant est composé de :
- entre 60 et 70% d'un mélange de solvants,
- entre 5 et 15% de PVC,
- entre 35 et 10% d'acrylate, et
- entre 0 et 5%, typiquement moins de 0,5% d'amide d'acide oléique.

L'invention concerne également un procédé pour la fabrication d'un panneau EL, consistant à :
- se doter de l'électrode destinée à être située à l'avant du panneau,
- déposer la couche active sur cette électrode,
- déposer le diélectrique sur la couche active, et
- déposer l'électrode arrière sur le diélectrique.

Le panneau peut également être fabriqué par un procédé qui consiste à :
- se doter d'un support inerte,
- déposer la première électrode sur ce support,
- déposer le diélectrique sur la première électrode,
- déposer la couche active sur le diélectrique, et
- déposer la deuxième électrode sur la couche active.

Dans les deux modes de réalisation, les opérations de dépôt sont faites par sérigraphie.

L'invention se rapporte aussi à un liant destiné à être utilisé dans un panneau EL. Ce binder constitue le seul liant mis en oeuvre dans la fabrication dudit panneau. Il comporte :
- entre 60 et 70% d'un mélange de solvants,
- entre 5 et 15% de PVC,
- entre 35 et 10% d'acrylate, et
- entre 0 et 5%, typiquement moins de 0,5% d'amide d'acide oléique.

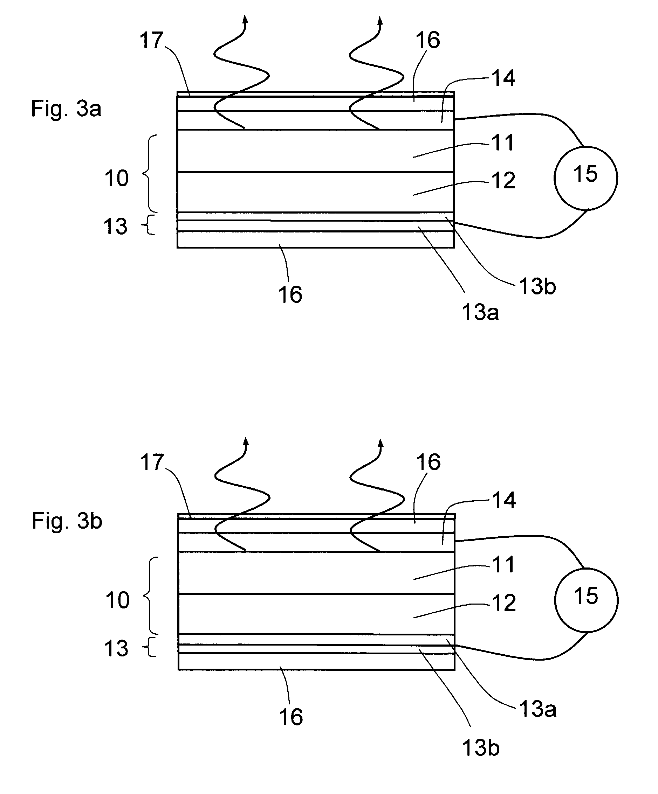

D'autres caractéristiques apparaîtront plus précisément à la lecture de la description qui suit, faite en référence au dessin annexé, dans lequel les figures 2, 3a et 3b présentent plusieurs modes de réalisation d'un panneau EL.

Comme dans l'art antérieur, le panneau EL comporte un ensemble 10 constitué d'une couche active 11 et d'un diélectrique 12 (figure 2).

La couche active 11 est préparée à partir d'une pâte comprenant du sulfure de zinc dopé appelé "phosphore", un binder et des adjuvants usuels, comme des solvants, des dispersants ou des retardateurs de prise. Eventuellement, des pigments peuvent être ajoutés pour modifier le spectre de la lumière émise par la couche. Après élimination des solvants, la couche active 11 comporte entre 65 et 95%, typiquement 88%, de phosphore, et entre 35 et 5%, typiquement 12%, d'une matrice organique comprenant les résidus secs du liant et des différents composés présents dans la pâte.

Le diélectrique 12 est préparé à partir d'une pâte comprenant du titanate de baryum, un binder et les adjuvants usuels. Après élimination des solvants, le diélectrique comporte entre 65 et 95%, typiquement 85%, de titanate de baryum, et entre 35 et 5%, typiquement 15%, d'une matrice organique comprenant les résidus secs du liant et des différents composés présents dans la pâte.

Une première électrode 13 est superposée à l'ensemble 10, du côté du fond du panneau. Elle est comporte une couche 13a préparée à partir d'une pâte comprenant de la poudre d'argent, un binder et les adjuvants usuels. Après élimination des solvants, l'électrode 13 comporte entre 65 et 95%, typiquement 85%, d'argent, et entre 35 et 5%, typiquement 15%, d'une matrice organique comprenant les résidus secs du liant et des différents composés présents dans la pâte. L'argent peut être remplacé par différents matériaux conducteurs, comme du cuivre ou même du graphite pour des électrodes de petite taille.

Pour former l'électrode 13, une couche 13b préparée à partir d'une pâte comprenant de la polyaniline, un binder et les adjuvants usuels peut éventuellement se substituer ou s'ajouter à la couche 13a. Dans cette deuxième éventualité, comme le montre les figures 3a et 3b, la couche de polyaniline est déposée indifféremment d'un côté ou de l'autre de la couche d'argent.

L'ensemble 10 est recouvert, du côté de l'avant du panneau, par une deuxième électrode 14. Celle-ci peut être constituée d'une couche conductrice transparente disposée sur un support. Les matériaux choisis pour l'électrode et le support doivent être conducteurs, transparent à la lumière émise par l'ensemble 10 et avoir une bonne affinité l'un avec l'autre. Par exemple, il peut s'agir d'une couche d'oxyde d'indium et d'étain déposée sur un support en polyester.

De manière avantageuse, l'électrode peut non seulement être conductrice et transparente, mais encore flexible. Dans ce cas, elle peut être constituée par un vernis chargé en oxyde d'indium et d'étain appliqué directement sur le diélectrique 11 ou par une couche de fines particules d'argent ou d'oxyde de zinc déposées sur un support, par exemple en polyester. De la sorte, le panneau obtenu est parfaitement conformable à la surface sur laquelle il est apposé.

Les électrodes 13 et 14 sont destinées à être reliées à un générateur 15 pour appliquer une tension électrique à l'ensemble 10.

De manière conventionnelle, une ou deux feuilles de protection 16 isolent les électrodes des agressions extérieures. Enfin, un film transparent 17 portant le motif que doit illuminer le panneau est disposé selon des techniques connues sur la feuille de protection 16 située à l'avant du panneau. Le motif peut aussi être imprimé directement sur l'électrode avant 14.

L'épaisseur globale du panneau, sans feuille de protection, est typiquement comprise entre 0,3 et 5mm.

Avantageusement, le binder utilisé pour former les pâtes est le même pour le diélectrique 12, pour la couche active 11 et pour l'électrode du fond 13. A titre d'exemple, il comprend :
- entre 60 et 70%, typiquement 64%, d'un mélange de solvants,
- entre 5 et 15%, typiquement 8,5%, de PVC,
- entre 35 et 10%, typiquement de l'ordre de 27%, d'acrylate, et
- entre 0 et 5%, typiquement moins de 0,5% d'amide d'acide oléique.

Le mélange de solvant est composé de :
- entre 25 et 65% de xylène,
- moins de 2,5% de 3,5,5-triméthylcyclohex2-2enone,
- entre 2,5 et 10% de cyclohexanone,
- moins de 2,5% de 2-methoxy-1-methylacétate,
- moins de 2,5% de 1,2,4-triméthylbenzène, et
- moins de 2,5% de naphta.

Le tableau ci-dessous compare quelques caractéristiques de fonctionnement d'un panneau de l'art antérieur avec celles d'un panneau EL de même surface obtenu selon un mode de réalisation préféré de l'invention. Dans ce dernier :
- la couche active 11 a été préparée à partir d'une pâte composée de 72% de phosphore et de 28% de liant à laquelle sont ajoutés des pigments pour former un mélange comprenant 71,20%g de phosphore, 27,70% de binder, 0,58% de pigment orange, 0,52% de pigment rose ;
- le diélectrique 12 a été préparé avec une pâte composée de 66% de titanate de baryum, 34% de binder; et
- l'électrode du fond a été préparée avec une pâte composée de 66% d'argent en poudre, de 34% de binder.

| | Panneau de l'art antérieur | Panneau selon l'invention |
|---|---|---|
| Demi-vie | 850 h | >5000 h |
| Luminosité | 95 cd/m2 | >100 cd/m2 |
| Consommation d'énergie relative | 100% | environ 50% |
| Taille des panneaux | typiquement jusqu'à A2 | jusqu'à A0 et au-dessus |

On rappellera que la demi-vie est le temps requis pour que la luminosité diminue de moitié.

Pour la fabrication du panneau selon l'invention, les différentes couches sont formées et assemblées par sérigraphie. Cette technique est connue de l'homme du métier et ne sera donc pas décrite en détail. On notera simplement qu'elle consiste, pour fixer une couche sur un substrat, à appliquer le mélange constitutif de ladite couche sur une toile de maille déterminée, disposée sur le substrat. La viscosité du mélange est telle, qu'en lui appliquant une pression, il passe au travers de la toile et se répartit uniformément sur le substrat. Après séchage, la couche adhère au substrat.

Pour le panneau décrit ci-dessus, l'ordre de montage des couches peut être le suivant : électrode avant 14, couche active 11, diélectrique 12 et électrode arrière 13. Ces couches sont séchées, soit l'une après l'autre, après chaque application, soit toutes ensemble, à la fin.

En variante, l'ordre de montage peut être : électrode arrière, diélectrique, couche active, électrode avant. Dans ce cas, un support inerte sert de base à l'application de l'électrode arrière.

Ensuite, la ou les feuilles de protection 16 et le film 17 portant le motif sont disposés comme expliqués ci-dessus, selon les techniques connues de l'homme du métier.

Bien entendu, les deux variantes de montage ci-dessus peuvent également être appliquées aux cas où l'électrode arrière comporte une couche à base d'argent et/ou une couche à base de polyaniline.

On relèvera que, du fait que l'électrode du fond 13, à base d'argent et/ou de polyaniline, peut être déposée par sérigraphie, la couche obtenue est souple. Comme il en est de même pour toutes les autres couches, particulièrement lorsque l'électrode avant 14 est flexible, le panneau épouse parfaitement la forme du support sur lequel il est apposé, ce qui constitue un avantage important de l'invention.

La composition du diélectrique utilisé permet de l'appliquer en une seule fois. L'isolation qu'il procure est suffisante et l'inconvénient des panneaux EL ayant des couches multiples de diélectrique, à savoir une durée de vie plus faible, est évité.

Par ailleurs, le procédé ci-dessus ne nécessite pas de prendre de précaution particulière pour sa mise en ceuvre. Par exemple, l'emploi d'une salle blanche n'est pas indispensable, contrairement à l'usage habituel. La production industrielle des panneaux EL selon l'invention se trouve donc grandement facilitée.

## Revendications

1. Panneau électroluminescent comprenant un ensemble (10) constitué d'un diélectrique (11) et d'une couche active (12), et une première (13) et une deuxième électrodes (14) situées respectivement du côté du fond et de l'avant du panneau destinées à être reliées à un générateur de tension, ladite deuxième électrode (14) étant réalisée en un matériau transparent, ledit diélectrique (11), ladite couche active (12) et ladite première électrode (13) comportant chacun une substance active et des résidus secs d'un liant,
**caractérisé en ce que** ledit liant est identique pour ledit diélectrique (11), pour ladite couche active (12) et pour ladite première électrode (13).

2. Panneau selon la revendication 1, **caractérisé en ce que** ladite première électrode (13) comporte une couche dont la substance active est de la polyaniline (13b) et/ou une couche dont la substance active est un autre matériau conducteur (13a).

3. Panneau selon l'une des revendications 1 et 2, **caractérisé en ce que** ledit liant comporte :
- entre 60 et 70% d'un mélange de solvants,
- entre 5 et 15% de PVC,
- entre 35 et 10% d'acrylate, et
- entre 0 et 5%, typiquement moins de 0,5% d'amide d'acide oléique.

4. Panneau selon la revendication 3, **caractérisé en ce que** ledit liant comporte :
- 64% d'un mélange de solvants,
- 8,5% de PVC,
- 27% d'acrylate, et
- moins de 0,5% d'amide d'acide oléique.

5. Panneau selon l'une des revendications 3 et 4, **caractérisé en ce que** le mélange de solvant comprend :
- entre 25 et 65% de xylène,
- moins de 2,5% de 3,5,5-triméthylcyclohex2-2enone,
- entre 2,5 et 10% de cyclohexanone,
- moins de 2,5% de 2-methoxy-1-methylacétate,
- moins de 2,5% de 1,2,4-triméthylbenzène, et
- moins de 2,5% de naphta.

6. Panneau selon l'une des revendications 3 à 5, **caractérisé en ce que** ladite couche active (11) est constituée d'un mélange comprenant entre 65 et 95%, de "phosphore" et entre 35 et 5% de résidus secs organiques.

7. Panneau selon la revendication 6, **caractérisé en ce que** ladite couche active (11) est additionnée d'au moins un pigment, dont la quantité est d'environ 0,5% dudit mélange.

8. Panneau selon l'une des revendications 3 à 5, **caractérisé en ce que** ledit diélectrique (12) est formé d'un mélange comprenant entre 65 et 95% de titanate de baryum et entre 35 et 5% de résidus secs organiques.

9. Panneau selon l'une des revendications 1 à 8, **caractérisé en ce que** :
- la couche active (11) est préparée à partir d'une pâte composée de 72% de phosphore et de 28% de liant,
- le diélectrique (12) est préparé à partir d'une pâte composé de 66% de titanate de baryum et de 34% de liant, et
- la première électrode (13) est préparée à partir d'une pâte composée de 66% d'argent en poudre et de 34% de liant.

10. Panneau selon l'une des revendications 1 à 9, **caractérisé en ce qu'**il comporte, en outre, au moins une feuille de protection (16) disposée sur la dite deuxième électrode (14).

11. Panneau selon la revendication 10, **caractérisé en ce qu'**il comporte, en outre, un film transparent (17) portant le motif que doit illuminer le panneau et disposé sur ladite feuille de protection (16) située à l'avant du panneau.

12. Procédé de fabrication d'un panneau EL selon l'une des revendications précédentes, **caractérisé en ce qu'**il consiste à :
- se doter de ladite deuxième électrode (14),
- déposer ladite couche active (11) sur ladite deuxième électrode (14),
- déposer ledit diélectrique (12) sur ladite couche active (11), et
- déposer ladite première électrode (13) sur ledit diélectrique (12), les opérations de dépôt étant réalisées par sérigraphie.

13. Procédé de fabrication d'un panneau EL selon l'une des revendications précédentes, **caractérisé en ce qu'**il consiste à :
- se doter d'un support inerte,
- déposer ladite première électrode (13) sur ledit support,
- déposer ledit diélectrique (12) sur ladite première électrode (13),
- déposer ladite couche active (11) sur ledit diélectrique (12), et
- déposer ladite deuxième électrode (14) sur ladite couche active (11),
les opérations de dépôt étant réalisées par sérigraphie.

14. Liant destiné à être utilisé dans un panneau EL, **caractérisé en ce qu'**il constitue le seul liant mis en oeuvre dans la fabrication dudit panneau et **en ce qu'**il comporte :
- entre 60 et 70% d'un mélange de solvants,
- entre 5 et 15% de PVC,
- entre 35 et 10% d'acrylate, et
- entre 0 et 5%, typiquement moins de 0,5% d'amide d'acide oléique.
